# EUROPEAN PATENT APPLICATION

(11) **EP 2 023 565 A1**
(43) Date of publication of application: **11.02.2009**
(21) Application number: 07015780.5
(22) Date of filing: 10.08.2007
(51) Int. Cl.: H04L 29/06

(54) **Method and device for data interception and communication system comprising such device**

(71) Applicant: Nokia Siemens Networks Oy, 02610 Espoo (FI)
(72) Inventor: Kröselberg, Dirk, 80469 München (DE)
(74) Representative: Schober, Ralf Stefan

(57) **Abstract**

A method and a device for data interception in a network are provided, said network comprising a mechanism and/or a functionality according to an Extensible Authentication Protocol (EAP). The method comprises the steps of (a) a first network element provides session information to a third network element; (b) a second network element provides identity information to the third network element; and (c) the third network element processes and/or forwards at least a portion of the session information and/or identity information provided.

## Description

The invention relates to a method and to a device for data interception and to a communication system comprising such a device.

For details on WiMAX networks reference is made to [1].

In WiMAX networks, it is possible to hide the real subscription and hence the subscriber's identity from the local access network and/or from the visited network (in case of roaming). This means that a Access Service Network (ASN), or a visited Connectivity Service Network (vCSN) are not able to identify the subscriber using any service offered by their network. Only the home CSN (hCSN) of a subscriber is able to reveal the subscriber's identity.

WiMAX subscribers or devices can use a pseudonym instead of their real subscription identities as the username part of the Network Access Identifier (NAI, see [2]) provided to the network during network entry and during the authorization procedure uses an Extensible Authentication Protocol (EAP, see [3]).

The real subscription identity is communicated only from the subscriber's device to the hCSN, EAP allows for hiding this identity in a way that any traversed network in-between, especially ASN or any vCSN cannot see the real identity of the subscriber.

Legal interception may be required in the local access network or the visited network in particular with regard to a nationally or internationally roaming subscriber. However, as no real subscription identity is made available in the ASN or vCSN, any Legal Enforcement Agency (LEA) is unable to map any intercepted information to a specific subscriber, i.e. a real or legal person.

The problem to be solved is to overcome the disadvantages as described and to provide an approach that allows legal interception in an efficient way.

This problem is solved according to the features of the independent claims. Further embodiments result from the depending claims.

In order to overcome this problem, a method for data interception in a network is provided, said network comprising a mechanism and/or a functionality according to an Extensible Authentication Protocol (EAP). The method comprises the following steps:
(a) a first network element provides session information to a third network element;
(b) a second network element provides identity information to the third network element;
(c) the third network element processes and/or forwards at least a portion of the session information and/or identity information provided.

It is to be noted that intercepted data may refer to user data as well as to control data. Basically, various kinds of data traffic may be subject to interception.

It is further to be noted that session information may comprise session data of at least one subscriber together with some identification data used for this at least one subscriber.

Identity information may comprise in particular data that is associated with the real identity of the subscriber, i.e. the identity of the real or legal person connected with this subscriber.

The identity information provided by the third network element may also comprise identification data as used throughout the network for a subscriber.

For example, the session information may comprise:
- Pseudonym of subscriber X;
- Data Traffic caused by/for subscriber X.

The identity information however may comprise:
- Pseudonym of subscriber X;
- Identity associated with said pseudonym.

However said "pseudonym" may be any kind of session identity utilized for subscriber X. The identity information allows to reveal the real (or legal) person behind a particular pseudonym. Storing the identity information (mapping pseudonym to actual identity) and the data traffic originated by said pseudonym allows to identify activities of the actual person throughout the network.

For legal interception purposes, in particular in WiMAX networks, it may be useful providing access to both control and data traffic generated by and for a subscriber that uses network and application services (e.g., VoIP or any form of multimedia) offered by the (WiMAX) network.

Interception is typically done in network entities being in charge of controlling the subscriber related traffic. For a WiMAX network, in particular the Access Service Network Gateway (ASN GW) in the ASN, the Home Agent (HA), a network element being part of an IP multimedia subsystem (IMS) like a P-CSCF or S-CSCF, or a router in the Connectivity Service Network (CSN), and an Authentication, Authorization and Accounting (AAA) server are expected to be subject to regulatory requirements in the area of legal interception, i.e. these entities may have to provide appropriate interfaces and functionalities to provide information as requested by an LEA.

A significant information that is subject to such an interception is an identity and/or additional information allowing to map intercepted data to the subscription used by the device being intercepted. Hence, the subscriber's identity referring to a real or legal person can be determined.

The approach presented in particular applies to network architectures using an Extensible Authentication Protocol (EAP) that may be utilized to describe an access network, a visited network and/or a home network in general.

In an EAP approach, the identity can - depending on the capabilities of an actual EAP method - be hidden and only be revealed by the end device (EAP supplicant) and the backend AAA server, but not by an intermediate network element.

In an embodiment, the network comprises a Wireless Local Area Network (WLAN) and/or a Worldwide Interoperability for Microwave Access system (WiMAX).

In particular, the network may comprise several such WLANs and/or WiMAX networks.

In another embodiment, the first network element comprises a functionality of at least one of the following components:
- an Access Service Network Gateway;
- a Home Agent or a router;
- a P-CSCF or S-CSCF of an IMS system;
- an AAA server located within the visited network.

Furthermore, the first network element may be realized in or as one of the previous components.

In a further embodiment, the second network element comprises a functionality of at least one of the following components:
- an AAA server;
- a computer system performing AAA services.

Furthermore, the second network element may be realized in or as one of the previous components.

In a next embodiment, the network comprises a mobile station, a visited network and a home network.

It is also an embodiment that
- the first network element is associated with and/or located in the visited network or in the home network; and
- the second network element is associated with and/or located in the home network.

Pursuant to another embodiment, said session information comprises at least one of the following:
- a session identifier;
- a Network Access Identifier;
- an AAA session identifier;
- a Chargeable User Identity;
- a Call-ID or IMPU.

The session information may preferably comprise or be a piece of information connected to a particular session of at least one subscriber.

According to an embodiment, said identity information comprises at least one of the following:
- an identity of at least one subscriber;
- identities of a group of subscribers;
- an identity based on a pseudonym and/or an identifier used in the network, in particular based on a MAC address;
- a status of a subscriber, in particular a status of connection within the network.

The identity of the subscriber may in particular comprise information upon the real subscriber, i.e. the real or legal person behind the subscription. The status of a subscriber may reveal whether such subscriber is (or was) active in the network. In addition, the status may show a position of the subscriber within the respective network, in particular over a given time period. Based on such information, tracking of a subscriber's position within the network (over a pre-determined period of time) is possible, in particular with the benefit of hindsight.

According to another embodiment, the third network element is a legal interception (LI) device.

Such legal interception (LI) device may be located within the range of a visited network or within a home network. The LI device may further be at least partially implemented within the first or the second network element.

In yet another embodiment, the third network element sends an interception message to the first network element prior to step (a).

Such interception message allows the third network element to define a request related to the identification information to be obtained. Such interception message may comprise data of a real or of legal person to be identified (or searched for). The identity information to be revealed by the method described is whether such person is currently (or was) active in the network. Furthermore, a position of such person might be revealed. The interception message may in particular be directed to more than one subscriber and/or to all or a group of subscribers (for a predetermined period of time).

As an alternative, the interception message may comprise a pseudonym, temporary session identifier, or network identifier (e.g., MAC address, NAI, AAA session ID, Chargeable user id (CUI), IP addresses, a Call-ID or IMPU) to which the real subscriber is required.

As a further alternative, the third network element aggregates and/or correlates at least a portion of the session information and/or identity information provided.

The third network element may in particular act as a filter to forward a reduced set of information.

It is another alternative that in a step (d) the third network element forwards data to a Legal Enforcement Agency (LEA).

Hence, the data can be preferably packed or condensed prior to sending it to the LEA. This is in particular useful as the LEA might be only interested in certain subsets of data, e.g., certain subscribers and/or certain timeframes.

As an alternative, the Legal Enforcement Agency correlates information provided by one or more third network elements. In particular, this can be a third network element of a visited network and another third network element of a home network.

Hence, even all data can be forwarded by the third instance to the LEA and the processing (completely or partially) can be conducted at the LEA.

In a further embodiment, prior to step (b) the following step (a2) is processed, i.e. the third network element requests identity information from the second network element.

This is in particular useful to trigger the second network element to provide identity information to the third network element. Further, the particular data to be provided in such way may be restricted and/or filtered pursuant to this step (a2).

In a next embodiment, in the step (b) the second network element provides a response to the request of the third network element comprising identity information. Further, in a step (a1), a forth network may request identity information from the third network element (which may in particular trigger said step (a2)).

This forth network element may in particular be the Legal Enforcement Agency.

According to a subsequent embodiment, in the step (c) the third network element provides a response to the request from the forth network element comprising identity information.

It is yet another embodiment that the second network element stores session information, in particular for a pre-determined period of time.

Such session information stored by the second network element can be collected (at least partially) according to the request launched in step (a2).

The problem stated above is also solved by a device for legal interception comprising a processor unit that is equipped / arranged such that the method as described herein is executable on said processor unit.

It is an embodiment that the device is a communication device, in particular a Legal Interception (LI) device.

The problem stated supra is further solved by a device for legal interception comprising:
- means for requesting a legal interception from a first network element;
- means for receiving an identity information from the second network element.

In addition, the problem stated above is solved by a communication system comprising the device as described herein.

Embodiments of the invention are shown and illustrated in the following figures:
- Fig.1: shows a WiMAX Architecture comprising a (Mobile) Subscriber Station, a visited network and a home network;
- Fig.2: shows a message flow diagram depicting WiMAX legal interception with backend identity correlation;
- Fig.3: shows a message flow diagram depicting WiMAX legal interception with backend identity correlation and subscriber database request.

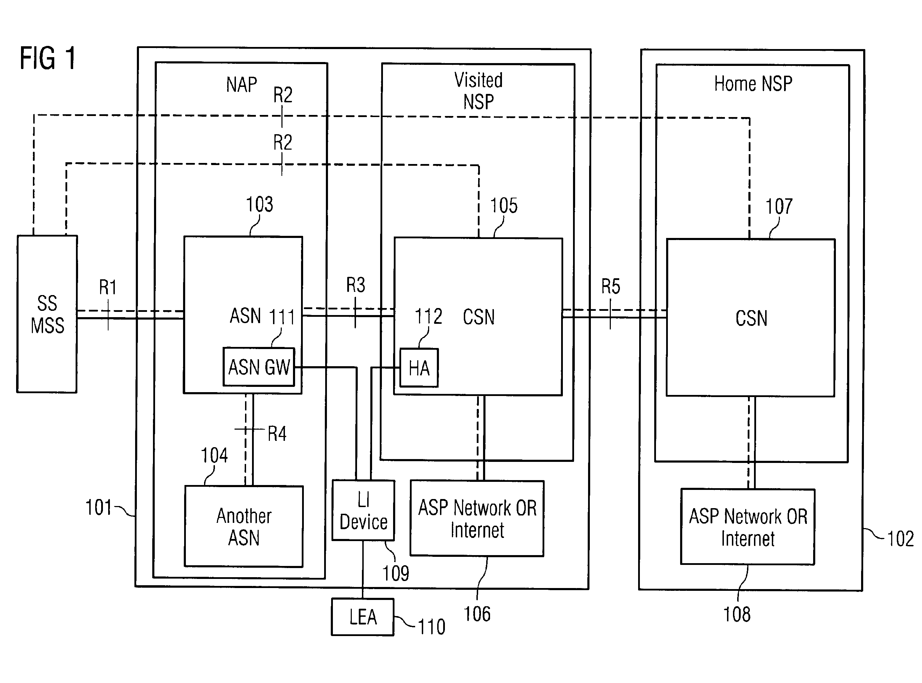

**Fig.1** shows a WiMAX Architecture comprising a Subscriber Station SS (also referred to as Mobile SS, MSS), a visited network 101 and a home network 102.

The visited network 101 comprises a Network Access Provider NAP with an Access Service Network ASN 103 and another ASN 104, wherein the ASN 103 and the ASN 104 are connected via an R4 interface. The visited network 101 further comprises a visited Network Service Provider NSP comprising a Connectivity Service Network CSN 105 that is connected to an ASP network or the Internet 106.

The ASN 103 and the CSN 105 are connected via an R3 interface. The Subscriber Station SS is connected to the ASN 103 via an R1 interface. The Subscriber Station SS is further connected to the CSN 105 via an R2 interface.

The home network 102 comprises a home Network Service Provider NSP with a Connectivity Service Network 107 that is connected to a ASP Network or the Internet 108. The CSN 107 is connected to the CSN 105 via an R5 interface and to the Subscriber Station SS via an R2 interface.

A LI Device 109 may be located within the visited network 101 and it may be connected to a Legal Enforcement Agency 110. As an alternative, the LI Device 109 may be located within the home network 102.

In an embodiment, the LI Device 109 is connected to an ASN GW 111 within the ASN 103 and to a Home Agent HA 112 within the CSN 105. It is to be noted that the ASN GW 111 and/or the HA 112 may be functional components implemented in the respective blocks 103, 105. Alternatively, the ASN GW and/or HA may comprise such LI device functionality 109.

It is to be noted that the HA 112 can be located within the visited network or within the home CSN.

The approach described herein in particular allows a correlation of identities in the network such that a legal intercept facility (e.g., an LI device) or an LEA is able to map a pseudonym or any other kind of temporary identity to a subscriber's identification or any other data connected to an actual or legal person, or vice versa.

The mechanism allows maintaining an identity hiding feature as specified by the WiMAX Forum.

For intercepting information in a WiMAX access or visited network (ASN or CSN) and for correlating intercepted information to subscriber identities, in particular the following approaches can be utilized.

The LI device or the LEA (hereinafter in particular referred to as "LI infrastructure") receives intercepted information (control/signaling information and/or data) from the network elements of the access network and/or of the visited network (e.g., ASN-GW, Mobile-IP HA, P-CSCF, S-CSCF, AAA-Server in the visited network).

Further, the LI infrastructure may independently also receive information from the home network of the subscription.

Such information from both networks may include specific session-related information (e.g., session-related identifiers) that allow a mapping of intercepted data.

Preferably, LI architectures include an LI device (a mediation device and/or an aggregation device) to trigger an interception as requested by an LEA and to aggregate intercepted information as well as to send such information (or a portion thereof) to the LEA that asked for interception. The information forwarded to the LEA by the LI device may in particular be (partially) processed, e.g., filtered and/or compressed by the LI device to meet the request of the LEA. Of course, data may be transparently forwarded to the LEA without any processing by the LI device.

The LEA may further correlate information received from different sources and hence be able to reveal an identity of a subscription, i.e., the real or legal person.

Such correlation can be conducted (to a full or partial extent) by the LI device.

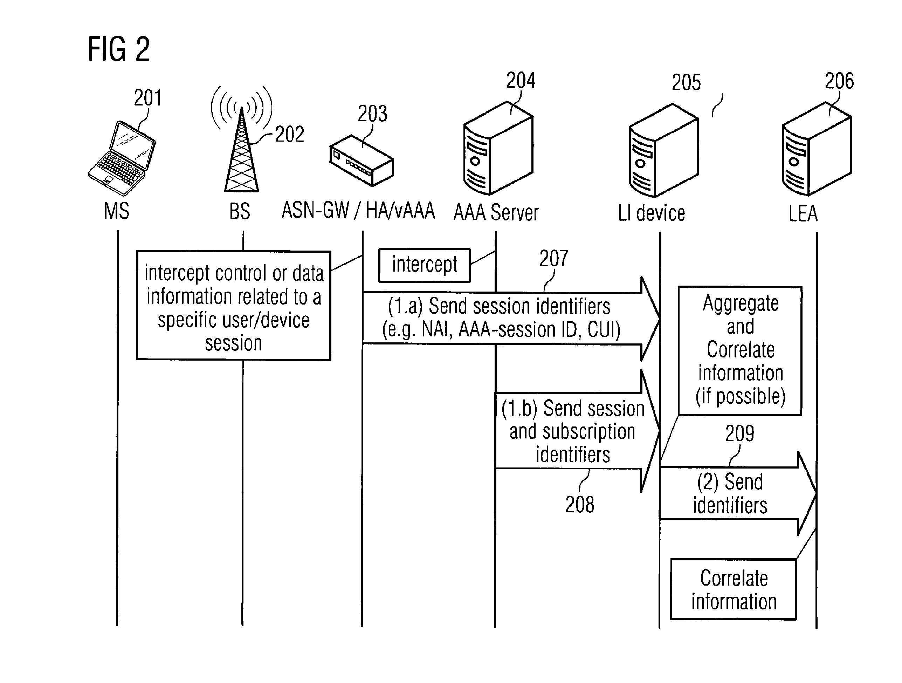

**Fig.2** shows a message flow diagram depicting WiMAX legal interception with backend identity correlation. It shows a mobile station MS 201, a base station BS 202 a first network element 203 (that can be, e.g., an ASN GW, a HA, a vAAA or the like), a second network element 204 (e.g., an AAA server), a third network element 205 (e.g., an LI device) and a forth network element 206 (e.g., an LEA).

The fist network element 203 may obtain a trigger message, an intercept control indication or any other message requesting information to a specific user or device session. Hence, the first network element 203 sends via a message 207 session information, in particular session identifiers (e.g., NAI, AAA-session identifiers, CUI, Call-ID, IMPU) to the third network element 205.

The second network element 204 may also obtain an intercept trigger and thereupon sends via a message 208 session information (e.g., session subscriptions) and identity information (e.g., subscription identifiers) to the third network element 205. Upon receipt of the identity information, the third network element 205 is able to reveal the subscriber's identity by mapping the session information or other temporary identity information to the permanent identity or subscription information, or vice versa. Hence, the third network element 205 may aggregate and correlate information provided by the first network element 203 and the second network element 204.

In a message 209 the third network element 205 conveys information processed (e.g., information aggregated and correlated) to the forth network element 206. Alternatively, the third network element may simply forward information obtained by the first network element 203 and the second network element 204 to the fourth network element 206 for processing, in particular for correlation/aggregation purposes and mapping the session information or other temporary identity information to the permanent identity or subscription information, or vice versa. In particular, the fourth network element 206 may aggregate and correlate information provided by one or more third network elements that are forwarding information obtained from the first network element 203 and the second network element 204.

As an alternative, the LI device may receive intercepted information comprising identity information related to a session intercepted from network elements of the access network and/or of the visited network (e.g., ASN-GW, Mobile-IP HA, AAA-Server in the visited network).

The home network (an AAA server or a network function providing network access authentication and/or authorization or a central user database) may store session related information (in particular session identifiers or temporary identifiers) and identity information.

Upon information stored, the mapping between session related information and identity information should be feasible.

Such session (related) information may in particular relate to at least one session of a subscriber (or of a real or legal person).

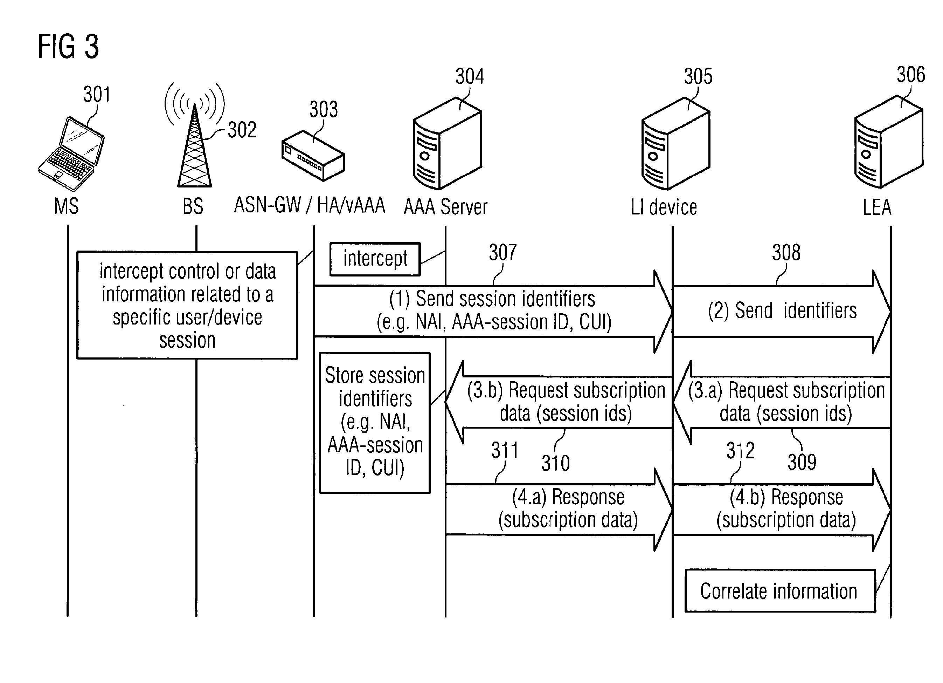

**Fig.3** shows a message flow diagram depicting WiMAX legal interception with backend identity correlation and subscriber database request. It shows a mobile station MS 301, a base station BS 302 a first network element 303 (that can be, e.g., an ASN GW, a HA, a P-CSCF, a vAAA or the like), a second network element 304 (e.g., an AAA server), a third network element 305 (e.g., an LI device) and a forth network element 306 (e.g., an LEA).

The first network element 303 may obtain a trigger message, an intercept control indication or any other message requesting information to a specific user or device session. Hence, the first network element 303 sends via a message 307 session information, in particular session identifiers (e.g., NAI, AAA-session identifiers, CUI, Call-ID, IMPU) to the third network element 305.

In a subsequent message 308 the third network element 305 forwards the session information to the forth network element 306.

The second network element 304 may also obtain an intercept trigger and thereupon it may store session information and/or identity information within an internal and/or external database.

Upon receiving a message 310 from the third network element 305 requesting subscription data, based on particular session identities, the second network element 304 responds by sending the subscription data via a message 311.

However, said message 310 may be triggered by the forth network element 306, sending such request to the third network element 305. The response 311 provided by the second network element 304 may then be forwarded to the forth network element 306, enabling the forth network element 306 to correlate and/or aggregate the information obtained.

The request messages 309 and 310 may advantageously comprise parameters that allow to filter particular subscribers or groups of subscribers. Such groups may be related to network identities, location or area, time, etc.

It is an option that the first instance 203 or 303 does not provide information directly to the third instance 205 or 305, but via a CSN and/or a HA.

For example, the LI device or the LEA may send a request message 309 or 310 to the home network AAA server 304, said message 309 or 310 comprising at least one intercepted session identifier. The AAA server 304 may compare the identifiers received with those already stored for the particular subscriber(s) and, if there is a match, the AAA server 304 will convey identity information that can be used to reveal a subscriber's identity.

The embodiments show in particular a WiMAX-type implementation, but are not limited to such networks.

Any function performing interception due to a request from a connected LI device and/or LEA, may include one or more of the following session identifiers in the information sent towards the LI infrastructure (LI device and/or LEA):
- the NAI used for the session that is intercepted;
- a Mobile IP Session Identifier (e.g. MIP NAI) for the IP mobility session;
- a Mobile IP SPI value used for the IP mobility session;
- the AAA-Session ID (or Accounting-Multi-Session ID) value of the current AAA session;
- the CUI of the session;
- the value of the Class Attribute used for the current AAA session;
- IP addresses (e.g., HoA, CoA, IPv4/6 addresses);
- IMPU or Call-ID;
- other temporary session identifiers, e.g., used for QoS sessions or for accounting/charging purposes.

The AAA server or a user database intercepted may include one or more of these temporary identifiers. Such information preferably is part of the message sent towards the LI infrastructure. Further identity information related to a subscriber's identity may be included to reveal the real or legal person associated with the respective subscription.

The LI infrastructure (i.e. either the LI device or the LEA or (partially) both) may aggregate, forward or store the received LI information obtained from either the first network element 203, 303 or the second network element 204, 304.

The LI infrastructure reveals the identity of the respective subscription by mapping session identifiers received from the access or from the visited network to session identifiers received from the home network. If there is a match, the subscription information will be stored (within the LI infrastructure) in view of session identifiers received from the home network.

Such correlation step(s) can be processed either directly upon receipt of intercepted information including the identifiers, or later (in a deferred manner) by analyzing the stored data including the identifiers.

According to the embodiment of Fig.3, the AAA server may store session identifiers as generated by itself or received by messages exchanged with the intercepted device, access or visited network, in relation to the subscription information (if the subscription database is not immediately available within this AAA server, the AAA server, e.g., may have to synchronize with a subscription database to obtain the latest version of identity information).

If the LI infrastructure needs to reveal a subscriber's identity, but has information intercepted that only uses pseudonyms or other data that does not immediately disclose the identity required, the LI infrastructure sends the message 309 or 310 to the AAA server including intercepted session identifiers as conveyed in message 307 (to the LI device) or in message 308 (to the LEA).

An address of such AAA server to obtain identity information from, e.g., a home network operator, can be obtained, e.g., by extracting realm or domain information from the session identifiers (e.g., extracting a realm part of a pseudonym NAI).

The AAA server (e.g., second network element 304 in Fig.3) tries to map the session identifiers with session identifiers stored by the AAA server (in an internal or central user database). If there is a match, the AAA server returns via said message 311 the requested subscription information to the LI infrastructure 305, 306.

With this, the LI infrastructure is able to correlate intercepted information with a real or legal person's identity.

### Abbreviations:

- AAA: Authentication, Authorization and Accounting
- ASN: Access Service Network
- ASP: Application Service Provider
- CoA: Care of Address
- CSN: Connectivity Service Network
- CUI: Chargeable User Identity
- EAP: Extensible Authentication Protocol
- GW: Gateway
- HA: Home Agent
- hCSN: home CSN
- IMPU: IP Multimedia Public Identity
- IMS: IP Multimedia Subsystem
- IP: Internet Protocol
- LEA: Legal Enforcement Agency
- LI: Legal Interception
- MIP: Mobile Internet Protocol
- MSS: Mobile Subscriber Station
- NAI: Network Access Identifier
- NAP: Network Access Provider
- NSP: Network Service Provider
- PKI: Public Key Infrastructure
- P-CSCF: Proxy Call Session Control Function
- QoS: Quality of Service
- RADIUS: Remote Access Dial In User Service
- S-CSCF: Serving Call Session Control Function
- SS: Subscriber Station
- vCSN: visited CSN
- VoIP: Voice over IP
- VSA: Vendor Specific Attribute
- WiMAX: Worldwide Interoperability for Microwave Access
- WLAN: Wireless Area Network

### References:

[1] WiMAX-Forum, Technical Documents and Specifications:
   http://www.wimaxforum.org/technology/documents
[2] RFC 4284:
   http://www.rfc-archive.org/getrfc.php?rfc=4284
[3] RFC 3748:
   http://www.rfc-archive.org/getrfc.php?rfc=3748
[4] RFC 2865:
   http://www.rfc-archive.org/getrfc.php?rfc=2865

## Claims

1. A method for data interception in a network comprising a mechanism according to or a functionality according to an Extensible Authentication Protocol, said method comprising the following steps:
(a) a first network element provides session information to a third network element;
(b) a second network element provides identity information to the third network element;
(c) the third network element processes and/or forwards at least a portion of the session information and/or identity information provided.

2. The method according to claim 1, wherein the network comprises a Wireless Local Area Network and/or a Worldwide Interoperability for Microwave Access system.

3. The method according to any of the preceding claims, wherein the first network element comprises a functionality of at least one of the following components:
- an Access Service Network Gateway;
- a Home Agent or a router;
- a P-CSCF or S-CSCF of an IMS system;
- an AAA server located within the visited network.

4. The method according to any of the preceding claims, wherein the second network element comprises a functionality of at least one of the following components:
- an AAA server;
- a computer system performing AAA services.

5. The method according to any of the preceding claims, wherein the network comprises a mobile station, a visited network and a home network.

6. The method according to claim 5, wherein
- the first network element is associated with and/or located in the visited network or in the home network; and
- the second network element is associated with and/or located in the home network.

7. The method according to any of the preceding claims, wherein the session information comprises at least one of the following:
- a session identifier;
- a Network Access Identifier;
- an AAA session identifier;
- a Chargeable User Identity.

8. The method according to any of the preceding claims, wherein said identity information comprises at least one of the following:
- an identity of at least one subscriber;
- identities of a group of subscribers;
- an identity based on a pseudonym and/or an identifier used in the network, in particular a MAC address;
- a status of a subscriber, in particular a status of connection within the network.

9. The method according to any of the preceding claims, wherein the third network element is a legal interception device.

10. The method according to any of the preceding claims, wherein the third network element sends an interception message to the first network element prior to step (a).

11. The method according to any of the preceding claims, wherein the third network element aggregates and/or correlates at least a portion of the session information and/or identity information provided.

12. The method according to any of the preceding claims, wherein in a step (d) the third network element forwards data to a Legal Enforcement Agency.

13. The method according to claim 12, wherein the Legal Enforcement Agency correlates information provided by the third network element.

14. The method according to any of the preceding claims, comprising prior to step (b) the following step:
(a2) the third network element requests identity information from the second network element.

15. The method according to claim 14, wherein in the step (b) the second network element provides a response to the request of the third network element comprising identity information.

16. The method according claim 15, comprising the step:
(a1) a forth network requests identity information from the third network element.

17. The method according to claim 16, wherein in the step
(c) the third network element provides a response to the request from the forth network element comprising identity information.

18. The method according to any of the preceding claims, wherein the second network element stores session information, in particular for a pre-determined period of time.

19. A device for legal interception comprising a processor unit that is arranged such that the method according of any of the preceding claims is executable on said processor unit.

20. The device according to claim 19, wherein said device is a communication device, in particular a Legal Interception device.

21. A device for legal interception comprising:
- means for requesting a legal interception from a first network element;
- means for receiving an identity information from the second network element.

22. Communication system comprising the device according to any of claims 19 to 21.
